# EUROPÄISCHE PATENTSCHRIFT

(11) **EP 2 915 658 B1**
(45) Veröffentlichungstag und Bekanntmachung des Hinweises auf die Patenterteilung: **26.07.2017**
(21) Anmeldenummer: 14157764.3
(22) Anmeldetag: 05.03.2014
(51) Int. Cl.: B32B 21/06, B32B 29/06, G01N 21/35, B44C 5/04, F26B 25/22, B32B 21/02, B32B 29/02, G01N 21/3563, G01N 21/359, G01N 21/3554, G01N 21/27, G01N 21/84, B27N 1/02, B27N 7/00, F26B 13/00

(54) **Verfahren zur Bestimmung des Feuchtegehaltes einer Harzschicht auf einer mit einem faserhaltigen Trägermaterial beschichteten Holzwerkstoffplatte**
Method for determining the moisture content of a resin layer on a wood board coated with a fibrous support material
Procédé de détermination du taux d'humidité d'une couche de résine sur une plaque de bois revêtu d'un matériau de support fibreux

(43) Veröffentlichungstag der Anmeldung: 09.09.2015
(73) Patentinhaber: Flooring Technologies Ltd., Kalkara SCM1001 (MT)
(72) Erfinder: Kalwa, Norbert, 32805 Horn-Bad Meinberg (DE); Denk, Andre, 16909 Wittstock/Dosse (DE)
(74) Vertreter: Maikowski & Ninnemann Patentanwälte Partnerschaft mbB

(56) Entgegenhaltungen:
- EP-A2- 1 977 909
- WO-A1-2007/021235
- US-A1- 2003 048 440
- US-A1- 2004 094 851
- US-A1- 2007 131 862

## Beschreibung

Die vorliegende Erfindung betrifft ein Verfahren zur Bestimmung des Feuchtegehaltes einer Harzschicht auf einer Trägerplatte nach dem Oberbegriff des Anspruchs 1.

Holzwerkstoffplatten als Trägermaterialien werden in den verschiedensten Bereichen eingesetzt und sind weit verbreitet. So sind Holzwerkstoffplatten unter anderem aus der Verwendung als Fußbodenpaneele, zum Beispiel in Form von Laminatböden, als Dämmstoffplatten für den Innen- und Außenbereich oder auch als Wandpaneele bekannt. Derartige Werkstoffplatten werden üblicherweise aus Holzfasern, Holzspänen oder Strands hergestellt. Im Falle von Laminatböden werden zum Beispiel aus Holzfasern hergestellte HDF-Platten (HDF = Faserplatte mit erhöhter Rohdichte) mit vielfältigen Dekoren und darauf aufgetragenen Schutzschichten verwendet.

Als Schutz- bzw. Verschleißschicht ist zum Beispiel die Verwendung von so genannten Overlay-Papieren bekannt. Diese Overlay-Papiere sind dünne, typischerweise mit einem Melaminharz getränkte Papiere, wobei verschleisshemmende Teilchen, wie zum Beispiel Korundpartikel, in das Kunstharz des Overlays eingemischt sind, um die Abriebfestigkeit des Laminats bzw. der Holzwerkstoffplatte zu erhöhen. Neben der Verwendung dieser Overlay-Papiere als Verschleißschicht wird in einer anderen Variante ein Pulver auf die Oberfläche der Werkstoffplatte aufgetragen, welches zum Beispiel natürliche oder synthetische Fasern, abriebfeste Partikel und Bindemittel umfasst. Auch hier wird durch die Verwendung insbesondere von verschleisshemmenden Partikeln die Abriebfestigkeit und Stabilität der Oberfläche der Werkstoffplatte erhöht. Ein Verfahren zur Herstellung solch einer Holzwerkstoffplatte ist beispielhaft in der EP 1 977 909 A2 beschrieben.

Neben den oben genannten Verschleißschichten in Form eines Overlay-Papieres oder eines Pulvers mit abriebfesten Partikeln ist auch der Auftrag eines flüssigen Harzes als Schutzschicht bekannt, in welchem ebenfalls verschleisshemmende Partikel, wie zum Beispiel Korundpartikel oder Glaskugeln, enthalten sein können. Eine solche flüssige Harzschicht wird auch als Flüssigoverlay bezeichnet (EP 2 338 693 A1).

Bei der Produktion von Holzwerkstoffplatten unter Verwendung eines Flüssigoverlays ist ein entscheidendes Kriterium zur Qualitätssicherung die Bestimmung der Feuchte während des Beschichtungsprozesses. Beim Beschichten von Holzwerkstoffplatten, wie zum Beispiel von mit einer Dekorschicht versehenen Holzwerkstoffplatten, mit wasserhaltigen, duroplastischen Harzen, wie zum Beispiel Harnstoff- oder Melaminharzen, muss das Wasser aus dem Harz durch Konvektion und/oder Bestrahlung, zum Beispiel mittels Infrarot (IR) und/oder Nahinfrarot (NIR)-Strahlung auf einen definierten Prozentsatz reduziert werden. Das zu entfernende Wasser stammt zum einen aus der wässrigen Harzlösung und zum anderen entsteht durch die Aushärtung des Harzes aufgrund der Kondensationsreaktion zusätzliches Wasser. Dieser Wassergehalt muss sich in einem relativ engen Rahmen bewegen, da sonst Qualitätsprobleme bei der Verarbeitung bzw. beim fertigen Produkt zeigen können.

Das Grundproblem, das sich bei der Feuchtebestimmung von Platten mit Flüssigaufbau stellt, ist das relativ ungünstige Verhältnis zwischen aufgetragener Harz-Wassermenge und dem Gesamtgewicht der beschichteten Platte. Dieses Verhältnis liegt bei ca. 1:30 bis 1:50, das heißt, die aufgetragene flüssige Overlayschicht ist in sehr dünnen Schichten vorgesehen. Aufgrund des gewichtsmäßigen geringen Anteils des Flüssigoverlays ist es schwierig, die Feuchteabnahme zum Beispiel gravimetrisch zu bestimmen. Ein solches Verfahren wird zum Beispiel bei der Bestimmung der Restfeuchte von mit duroplastischen Harzen imprägnierten Papieren angewendet. Dort liegt das Verhältnis zwischen Träger (Papier) und Harz bei ca. 1:1.

Auch eine Bestimmung der Feuchtigkeit einer Harzschicht, die als Flüssigoverlay auf eine Holzwerkstoffplatte aufgetragen ist, über eine so genannte Darrprobe ist nicht möglich. Das Darrprobe-Verfahren ist die genaueste Methode zur Bestimmung der Holzfeuchte, wobei eine Probe bei 103+/-2°C für 24 Stunden in einem Trockenofen getrocknet wird. Die Holzfeuchte ist definiert als das Verhältnis des Gewichts des im Holz enthaltenen Wassers zum Gewicht des absolut trockenen Holzes (Darrgewicht). Die Holzfeuchte ist demnach das Verhältnis zwischen Nassgewicht und Trockengewicht (Darrgewicht).

Bei Anwendung der Darrprobe auf einer mit einem Flüssigoverlay beschichteten Werkstoffplatte würde entsprechend nicht nur die Feuchte der Flüssigoverlay-Beschichtung bestimmt werden, sondern auch die Feuchte des Holzwerkstoffes, so dass man nur einen Wert der Gesamtfeuchte aus Platte und Beschichtung erhalten würde. Auch würde die Darrprobe bzw. das Darrverfahren aufgrund des Trocknungsprozesses von 24 Stunden keine kurzfristige Veränderung bzw. Einflussnahme auf das Trocknungsverfahren innerhalb der Fertigungslinie ermöglichen. Zudem kann eine solche Feuchtigkeitsbestimmung auch nur mit einer fertig beschichteten Werkstoffplatte nach Verlassen der Fertigungslinie durchgeführt werden und erlaubt somit auch aus diesem Grund kein Eingreifen in den Fertigungsprozess.

Auch die Möglichkeit des Verschließens der Holzwerkstoffplatte, genauer gesagt, der Holzträgerplatte, durch eine wasserundurchlässige Folie wäre nicht zur Lösung des Problems geeignet, da diese keine Feuchtigkeit durchlassen würde. Entsprechend würde dies zu einer Verfälschung des Ergebnisses beitragen, da Feuchtigkeit in die Grundierung wandert. Zudem würde träten Haftungsprobleme des Harzes auf solch einer wasserundurchlässigen Folie auf.

Ein zusätzliches Problem stellt sich bei der Verwendung von auf der Holzwerkstoffplatte angeordneten Trägermaterialien wie Dekorpapieren oder Finish-Folien. Derartige Papiere werden typischerweise unter Verwendung von geeigneten Leimen oder Bindemitteln wie Melamin-Formaldehyd-Harzen oder Harnstoff-Formaldehyd-Harzen auf die Holzwerkstoffplatte aufgeklebt bzw. aufgepresst. Aufgrund der Saugfähigkeit des Papiers nimmt dieses einen beträchtlichen Teil des Bindemittels (im Falle von Harnstoff-Formaldehyd-Harz bis zu 40%) auf. Das Papier weist nach Auftrag auf die Holzwerkstoffplatte somit eine zusätzliche Feuchte auf, die von der Unterseite des Papieres von der Holzwerkstoffplatte kommend, in das selbige eintritt. Eine Quantifizierung des durch den Aufklebeprozess des Papiers bedingten Feuchtigkeitsgrad ist bisher nicht möglich, wäre aber wünschenswert, um eine verbesserte Prozesskontrolle und Flexibilität bezüglich der verschiedenen Papiere während des Herstellungsverfahrens von Laminatböden und Paneelen zu erreichen.

Der vorliegenden Erfindung liegt daher die technische Aufgabe zugrunde, ein Verfahren bereitzustellen, mit welchem die Bestimmung des Feuchtegehaltes einer Harzschicht, zum Beispiel einem Flüssigoverlay, möglich ist, welche z.B. auf ein auf einer Holzwerkstoffplatte angeordnetes Dekorpapier aufgetragen ist, und welches eine hinreichend genaue Bestimmung der Feuchtigkeit ermöglicht und wodurch Qualitätsmängel, die dem Feuchtegehalt der Harzschicht zugeordnet werden können, abgestellt werden können.

Diese Aufgabe wird erfindungsgemäß durch ein Verfahren mit den Merkmalen des Anspruchs 1 gelöst.

Demnach wird ein Verfahren zur Bestimmung des Feuchtegehaltes von mindestens Harzschicht bereitgestellt, wobei die Harzschicht auf mindestens einem auf einer neue Seite_Mitteilung 7.2.2017

Holzwerkstoffplatte angeordneten und verklebten faserhaltigen Trägermaterial aufgetragen ist. Das vorliegende Verfahren umfasst die folgenden Schritte:
- Aufnehmen von mindestens einem NIR-Spektrum der auf der mindestens einen Holzwerkstoffplatte vorgesehenen Harzschicht unter Verwendung eines NIR-Detektors in einem Wellenlängenbereich zwischen 500 nm und 2500 nm, bevorzugt zwischen 700 nm und 2000 nm, insbesondere bevorzugt zwischen 900 nm und 1700 nm;
- Bestimmen des Feuchtegehaltes der Harzschicht durch Vergleich des für die zu vermessende Harzschicht ermittelten NIR-Spektrums mit mindestens einem für mindestens eine Referenzprobe mit bekannten Feuchtegehalt ermittelten NIR-Spektrums mittels einer multivariaten Datenanalyse (MDA),
- wobei das mindestens eine für die mindestens eine Referenzprobe ermittelte NIR-Spektrum mit bekanntem Feuchtegehalt unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde, und
- wobei die Oberfläche des faserhaltigen Trägermaterials als NIR-reflektierende Schicht wirkt.

Im vorliegenden Verfahren bewirkt das mindestens eine faserhaltige Trägermaterial eine Reflexion der auf die Harzschicht gerichteten NIR-Strahlen. Das faserhaltige Trägermaterial kann somit auch als NIR-reflektierende Schicht bezeichnet werden.

Das vorliegende Verfahren ermöglicht somit die Bestimmung der Feuchte bzw des Feuchtegehaltes einer Harzschicht, zum Beispiel eines Flüssigoverlays, die auf die Oberfläche eines faserhaltigen Trägermaterials aufgetragen ist, welches wiederum auf einer Holzwerkstoffplatte angeordnet ist. Die Bestimmung der Feuchte der Harzschicht erfolgt unmittelbar im Anschluss an die Beschichtung und/oder Trocknung derselbigen in bekannten Beschichtungs- und Trocknungsvorrichtungen. Von besonderem Vorteil ist, dass durch die Verwendung des NIR-Detektors eine Feuchtebestimmung in einer dünnen Harzschicht vorgenommen werden kann, die wiederum auf einem faserhaltigen Trägermaterial angeordnet ist, wobei das faserhaltige Trägermaterial selbst eine bestimmte Feuchte besitzt. Mit anderen Worten, mit dem vorliegenden Verfahren ist nicht nur die Feuchte der aufgetragenen neue Seite_Mitteilung 7.2.2017_Vergleichsexemplar
Harzschicht sondern auch die Feuchte des faserhaltigen Trägermaterials zusammen bestimmbar.

Die Verwendung von NIR-Spektroskopie zur Bestimmung von Eigenschaften wie Feuchtigkeit, Harz- und Wachsgehalt von losen Holzspänen oder Holzfasern ist aus der US 2007/0131862 A1 bekannt. Allerdings werden hier die Eigenschaften der losen Holzspänen oder Holzfasern vor dem Verpressen derselbigen zu Holzwerkstoffplatten bestimmt. Das vorliegende Verfahren ermöglicht hingegen die Bestimmung der Feuchtigkeit einer Harzschicht auf einer bereits verpressten und z.B. mit einem Dekorpapier versehenen Holzwerkstoffplatte.

In der WO 2007/021235 A1 wird ein Verfahren zur Herstellung von mehrschichtigen Substraten, wie zum Beispiel mehrschichtigen Holzwerkstoffplatten, beschrieben, wobei mittels NIR Spektroskopie die auf das Substrat aufzutragende Harzmenge überwacht und gesteuert wird. Hierfür werden mindestens zwei Sets von Messdaten im Produktionsprozess zum Beispiel unter Verwendung von NIR Spektroskopie erstellt, auf deren Basis ein Kalibrierungsmodell wie zum Beispiel PLS ermittelt wird. Allerdings erfolgt hier keine Reflexion der NIR-Strahlung von der Oberfläche eines faserhaltigen Trägermaterials.

Der Feuchtegehalt der zu vermessenden Harzschichten liegt bevorzugt bei Werten von max. 15 Gew%, bevorzugt maximal 10 Gew%, insbesondere bevorzugt maximal 8 Gew%. Es ist ganz besonders bevorzugt, wenn der zu bestimmende Feuchtegehalt der Harzschicht zwischen 4 und 8 Gew% liegt.

Der Feuchtegehalt des faserhaltigen Trägermaterials kann hingegen - in Abhängigkeit von dem verwendeten Harz und dem Feststoffgehalt - stark variieren. So kann das Trägermaterial nach Aufbringen auf die Holzwerkstoffplatte eine Restfeuchte von bis zu 400%, bevorzugt von bis zu 300%, insbesondere von 100% aufweisen.

Das faserhaltige Trägermaterial wird bevorzugt unter Verwendung eines geeigneten flüssigen Bindemittels auf die Oberfläche der Holzwerkstoffplatte aufgebracht und verklebt. Dabei kann das Bindemittel oder Tränkharz zunächst auf die Oberfläche der Holzwerkstoffplatte aufgetragen z.B. aufgewalzt werden und das (trockene bzw. unbeharzte) faserhaltige Trägermaterial wird aufgelegt oder eine Seite des faserhaltigen Trägermaterials, bevorzugt die Unterseite des Trägermaterials, wird mit dem Bindemittel (teil)imprägniert und das (teil)imprägnierte Trägermaterial wird mit der Holzwerkstoffplatte verklebt. Mit anderen Worten, das mindestens eine faserhaltige Trägermaterial ist zumindest auf einer Seite mit mindestens einem Bindemittel versehen. Eine Kombination dieser Schritte ist auch möglich, d.h. das Binde- oder Imprägniermittel wird sowohl auf die Oberfläche der Holzwerkstoffplatte als auch auf eine Seite, bevorzugt die Unterseite, des faserhaltigen Trägermaterials aufgebracht.

In einer bevorzugten Ausführungsform des vorliegenden Verfahrens ist eine Lage des faserhaltigen Trägermaterials auf der Holzwerkstoffplatte angeordnet. Es ist aber auch generell möglich und vorstellbar, mehr als eine Lage eines faserhaltigen Trägermaterials, z.B. zwei oder drei Lagen zu verwenden. So kann in einer Ausführungsform auf der Holzwerkstoffplatte zunächst eine Dekorpapierlage mit anschließender Overlaypapierlage vorgesehen sein.

In jedem Fall nimmt das faserhaltige Trägermaterial Feuchte aus dem Bindemittel auf. Zusätzlich zu der Feuchte aus dem Binde- bzw. Imprägniermittel saugt das faserhaltige Trägermaterial Feuchte aus der auf der Oberfläche des Trägermaterials (d.h. der der mit dem Imprägniermittel versehenen Seite des faserhaltigen Trägermaterials gegenüberliegenden Seite) aufgetragenen flüssigen Harzschicht auf. Die von dem Trägermaterial aufgenommene Feuchte ist insbesondere durch das Saugverhalten des faserhaltigen Trägermaterials bedingt, die von der im Trägermaterial verwendeten Faserart abhängt. So wird ein Trägermaterial aus Holzfasern eine geringere Saugfähigkeit im Vergleich zu einem Trägermaterial aus Zellulosefasern aufweisen.

Das vorliegend zum Einsatz kommende Binde- oder Imprägniermittel ist bevorzugt ein Melamin-Formaldehyd-Harz, ein Melamin-Harnstoff-Harz, ein Polyurethan-Harz oder ein Acrylatharz z. B. mit einem Feststoffgehalt zwischen 30 bis 80%, bevorzugt 40 bis 70%, insbesondere bevorzugt von 50 bis 60% ist.

In einer Ausführungsform des vorliegenden Verfahrens ist das mindestens eine faserhaltige Trägermaterial aus organischen Fasern, anorganischen Fasern oder einer Mischung davon hergestellt. Die organischen Fasern können ausgewählt sein aus der Gruppe enthaltend Holzfasern, gebleichte und ungebleichte Zellulosefasern, Baumwollfasern, Jutefasern, Hanffasern, Bambusfasern, Flaxfasern, Sisalfasern und Wollfasern. Die anorganischen Fasern können ausgewählt sein aus der Gruppe von Kunststofffasern, insbesondere Fasern aus Polyester, Polyethylenterephthalat, Polyamid, Polyimid, Aramid, Polyacrylnitril, Polytetrafluorethylen, Polyethylen, Polypropylen, Polyvinylchlorid, Polyurethan; Glasfasern und Keramikfasern. Bevorzugt werden Fasern verwendet, die über eine ausreichende Lichtechtheit verfügen.

In Abhängigkeit von der verwendeten Fasern kann das mindestens eine faserhaltige Trägermaterial entsprechend in Form eines bedruckten oder nicht-bedruckten Papieres, Vlies oder als Folie vorliegen. Beispielsweise kann als faserhaltiges Trägermaterial ein Dekorpapier, ein Overlay-Papier, eine Finish-Folie, ein Kraft-Papier, ein Vorimprägnat (vorimprägniertes Papier) oder ein Glasvlies verwendet werden.

NIR-Detektoren ermöglichen die Bestimmung von Feuchte bzw. des Wassergehaltes in verschiedensten Materialien, wie zum Beispiel Harzen, Holzwerkstoffen, Holzpellets, Getreide usw. Bei dieser Art der Messung werden in wenigen Zehntelsekunden mehrere hundert NIR-Messungen durchgeführt, so dass auch eine statistische Absicherung der gemessenen Werte gewährleistet ist. Wesentlich ist dabei, dass durch eine Kalibrierung unter Verwendung von Darrproben den spektroskopisch ermittelten Messwerten reale Feuchtewerte gegenübergestellt werden. Dies ist im Fall von Getreide oder Holzpellets leicht möglich, da die Gesamtfeuchte ermittelt werden soll. Bei der Bestimmung der Feuchte in einem Beschichtungssystem auf einem Holzwerkstoff, wie vorliegend im Falle eines Flüssigoverlays auf einer Holzwerkstoffplatte, versagt die beschriebene Methode wegen des zusätzlich aus dem Trägermaterial verdunstenden Wassers.

Dies gilt nicht nur für alle Holzwerkstoffplatten, sondern auch für andere Trägerplatten, die Restfeuchten enthalten. All diese können als Träger für dekorative Veredelungen in den unterschiedlichsten Anwendungen verwendet werden. Dabei werden sie entweder bedruckt bzw. wie vorliegend mit einem zusätzlichen faserhaltigen Trägermaterial und mit Verschleißschichten auf Basis wässriger Harze versehen. Im Einzelnen können dies Spanplatten, Faserplatten, OSB-Platten, Sperrholz, Magnesiumoxid-Platten, Wood-Plastic-Composites, Kunststoffplatten, Zementspan/-faserplatten und Gipsfaserplatten sein. Die Liste lässt sich beliebig verlängern und besitzt keinen Anspruch auf Vollständigkeit.

Entsprechend kann als Trägerplatte eine Holzwerkstoffplatte in Form einer mitteldichten Faser (MDF)-, hochdichten Faser (HDF)- oder Grobspan (OSB)- oder Sperrholzplatte, einer Zementfaserplatte und/oder Gipsfaserplatte, eine Magnesiumoxid-Platte, eine Holz-Kunststoff-Platte und/oder eine Kunststoffplatte verwendet werden.

Das vorliegende Verfahren zur Bestimmung des Feuchtegehaltes einer Harzschicht, die auf einem auf einer Holzwerkstoffplatte angeordneten faserhaltigen Trägermaterial vorgesehen ist, unter Verwendung eines NIR-Detektors nutzt hingegen den Umstand aus, dass die NIR-Strahlung nicht durch die gesamte Werkstoffplatte, das heißt, durch Harzschicht und Trägerplatte, hindurch dringt, sondern an der Oberfläche des faserhaltigen Trägermaterials reflektiert. Die NIR-Strahlung dringt demnach im vorliegenden Verfahren lediglich und ausschließlich durch die Harzschicht, zum Beispiel Flüssigoverlay-Schicht durch und wird von der Oberfläche des faserhaltigen Trägermaterials als NIR-reflektierender Schicht zurück reflektiert. Die reflektierte NIR-Strahlung wird durch die Harzschicht in einer charakteristischen Weise absorbiert und das ermittelte NIR-Spektrum wird zur Bestimmung des Feuchtegehaltes verwendet.

Ein für eine Harzschicht wie z.B. ein Melaminharz ermitteltes NIR-Spektrum weist eine deutliche breite Absorptionsbande mit einem Absorptionsmaximum bei ca. 1490 nm auf. Diese Bande ist u.a. typisch für Melaminharz und entspricht der ersten Oberschwingung von N-H-Gruppen. Des Weiteren ist auch typischerweise eine Wasserbande bei ca. 1450 nm vorhanden. Wegen der Überlappung der beiden Banden erscheint die Wasserbande als Schulter der breiten Bande.

Ein unterschiedlicher Feuchtegehalt der Harzschichten ist insbesondere an der Höhe der Basislinie der NIR-Spektern erkennbar, hingegen unterscheiden sich die Formen der NIR-Spektren kaum. Ein linearer Zusammenhang zwischen den Absorptionswert am Bandenmaximum bei ca. 1490 nm und dem Feuchtegehalt gemäß der Gleichung(l) y = mx + b ist nicht nachweisbar, was wahrscheinlich an der Intensitätsabschwächung der Absorptionsbande von N-H Gruppen durch eine fortschreitende Polykondensation des Harzes begründet liegt.

Entsprechend erfolgen der Vergleich und die Interpretation der NIR-Spektren über den gesamten aufgenommenen Spektralbereich. Dies wird mit der multivariaten Datenanalyse (MDA) durchgeführt. Bei multivariaten Analysemethoden werden typischerweise mehrere statistische Variablen zugleich untersucht. Hierzu wird die in einem Datensatz enthaltene Zahl von Variablen reduziert, ohne gleichzeitig die darin enthaltene Information zu mindern.

Im vorliegenden Fall erfolgt die multivariate Datenanalyse über das Verfahren der Partial Least Squares (PLS) Regression, wodurch ein geeignetes Kalibrationsmodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB.

Es ist bevorzugt, wenn die Referenzprobe mit bekanntem Feuchtegehalt mindestens eine auf ein faserhaltiges Trägermaterial wie z.B. ein Dekorpapier oder ein Overlaypapier, welches wiederum auf einer Holzwerkstoffplatte aufgeklebt ist, aufgetragene, insbesondere vorgetrocknete Harzschicht umfasst. Die Harzschicht, Schicht aus faserhaltigem Trägermaterial und Holzwerkstoffplatte der Referenzprobe sind dabei bevorzugterweise gleichartig zu der zu vermessenden Probe aus Harzschicht, faserhaltigem Trägermaterial und Holzwerkstoffplatte. Mit anderen Worten, die Harzschicht der Referenzprobe weist die gleiche Zusammensetzung auf, wie die zu vermessende Harzschicht. Dasselbe gilt für das zum Einsatz kommende faserhaltige Trägermaterial und die Holzwerkstoffplatte.

Die Gleichartigkeit von zu vermessender Probe und Referenzprobe ist insbesondere bei Verwendung von Harzschichten mit Zusatzstoffen wie Flammschutzmitteln, Fasern, Kohlenstoffnanoröhren und weiteren Additiven wesentlich. Die Zugabe von Zusatzstoffen zur Harzschicht resultiert typischerweise in zusätzlichen Peaks im NIR-Spektrum und ggf. in einer Verschiebung der Basislinie. Entsprechend ist eine erneute Kalibrierung bzw. die Erstellung eines neuen Kalibrationsmodells unter Verwendung einer gleichartigen Referenzprobe erforderlich.

Der Zusammenhang zwischen Feuchtegehalt einer Harzschicht und dem NIR-Spektrum dieser Harzschicht wird bevorzugt wie im Folgenden beschrieben ermittelt.

Zunächst wird eine erste Probe, zum Beispiel in Form einer mit einem Dekorpapier versehenen Holzwerkstoffplatte mit einer vorgetrockneten Harzschicht in einem Trockenofen getrocknet, zum Beispiel bei 103 +/-2 °C für 2 Stunden, und nach Abkühlen der getrockneten Probe unter Feuchteausschluss wird eine Messung mit dem NIR-Detektor durchgeführt. Das für eine vollständig getrocknete Probe (Darr-Probe) ermittelte NIR-Spektrum wird als Nullwert verwendet.

Anschließend werden mit einer Harzschicht und einem faserhaltigen Trägermaterial wie einem Dekorpapier versehene und vorgetrocknete Trägerplatten mit einer definierten Menge an Wasser besprüht, das sich in der Harzmatrix verteilt. Die so mit Wasser gespikten bzw. besprühten Trägerplatten werden in einem NIR-Detektor vermessen und die NIR-Spektren für diese mit einer definierten Menge an Wasser besprühten Trägerplatten ermittelt. Aufgrund der hohen Anzahl von Messungen innerhalb weniger Zehntelsekunden wird dabei eine eventuell vorhandene Ungleichverteilung des aufgesprühten Wassers eliminiert.

Anschließend erfolgt die Erstellung eines geeigneten Kalibrationsmodells, bevorzugt in der im Folgenden beschriebenen Weise. Zunächst wird ein Kalibrationsmodell aus den Spektren der Proben mit bekanntem Feuchtegehalt (d.h. der mit Wasser gespikten Trägerplatten) unter Verwendung der Partial Least Squares (PLS) Regression erstellt. Dieses Modell wird zur Bestimmung der Restfeuchte in der Darrprobe genutzt. Unter Anwendung dieses Kalibrationsmodells wird von dem Analyseprogramm ein Feuchtegehalt für die Darrprobe (getrocknete Trägerplatte mit Harzschicht) berechnet, wobei sich für die Darr-Probe ein negativer Feuchtewert bzw. Feuchtegehalt ergibt. Anschließend wird der Betrag des Feuchtegehaltes für die Darrprobe zu allen verwendeten Feuchtewerten der mit Wasser gespikten Trägerplatten (Kalibrierproben) addiert und der Feuchtegehalt der Darrprobe gleich Null gesetzt. Aus diesen neuen Kalibrierwerten der Feuchte und den gemessenen NIR-Spektren wird mit Hilfe der Partial Least Squares (PLS) Regression ein neues Kalibrationsmodell erstellt, welches eine Beziehung zwischen den gemessenen NIR-Spektren einer zu vermessenden Harzschicht auf einer Trägerplatte z.B. einer Holzwerkstoffplatte und den NIR-Spektren von Referenzproben mit bekanntem Feuchteanteil erstellt. Dieses zweite Kalibrationsmodell kann zur Vorhersage des Feuchtegehaltes aus dem gemessenen NIR-Spektren der unbekannten Proben verwendet werden.

Zu berücksichtigen ist bei dem oben beschriebenen Kalibrationsmodell, dass es nicht wesentlich ist, den absoluten Feuchtegehalt einer Harzschicht zu bestimmen, sondern vielmehr die Möglichkeit bietet, den Feuchtegehalt einer Harzschicht mit den Qualitätseigenschaften des finalen Werkstoffproduktes zu korrelieren. Das bedeutet, dass die ermittelten Feuchtewerte nicht als absolut genaue Feuchtewerte zu betrachten sind, sondern als ungefähre Werte. Dies erlaubt dann die Entwicklung und Vornahme von Maßnahmen zur Qualitätsverbesserung und/oder zur Prozesssteuerung einer Fabrikationslinie von Werkstoffplatten z.B. Holzwerkstoffplatten. So kann beispielsweise die Trocknerleistung oder der Vorschub bei ungenügender Trocknung einer Harzschicht angepasst werden. Weiterhin kann natürlich auch durch das Vorliegen von NIR-Messwerten eine Fehlersuche nach dem Ausschlussprinzip vorgenommen werden, was vorher nicht möglich war.

In einer Ausführungsform des vorliegenden Verfahrens besteht die zu vermessende Harzschicht aus mindestens einem formaldehydhaltigen Harz, insbesondere einem Melamin-Formaldehyd-Harz, einem Harnstoff-Formaldehyd-Harz oder Gemischen aus beiden. Weiterhin ist auch die Verwendung von wässrigen Polyurethan (PU)- oder Acrylatsystemen möglich.

Die Menge der zu vermessenden Harzschicht kann zwischen 10 bis 150 g Festharz/m², bevorzugt zwischen 20 und 100 g Festharz/m², insbesondere bevorzugt zwischen 40 und 60 g Festharz/m² liegen.

Es ist ebenfalls möglich, dass die zu vermessende Harzschicht abriebfeste Partikel, natürliche und/oder synthetische Fasern und weitere Additive aufweist. Die zu vermessende Harzschicht wird typischerweise in Form einer flüssigen Harzsuspension aus den oben genannten Harzen mit den entsprechenden Zusätzen auf die Oberfläche der Holzwerkstoffplatte aufgebracht.

Die in der Harzschicht (Flüssigoverlay) verwendeten natürlichen oder synthetischen Fasern sind bevorzugt ausgewählt aus der Gruppe enthaltend Holzfasern, Zellulosefasern, partiell gebleichte Zellulosefasern, Wollfasern, Hanffasern und organische oder anorganische Polymerfasern. Auch hier sollten die verwendeten Fasern über eine ausreichende Lichtechtheit verfügen.

Die abriebfesten Partikel des Flüssigoverlays sind bevorzugt ausgewählt aus der Gruppe enthaltend Aluminiumoxide, Korund, Borcabide, Siliziumdioxide, Siliziumcarbide und Glaskugeln, wobei Korundpartikel, Glas-/Hohlkugeln bzw. Glaspartikel besonders bevorzugt sind.

Wie bereits oben erwähnt, kann der wärmehärtbaren Harzschicht mindestens ein Additiv zugesetzt werden, das ausgewählt sein kann aus der Gruppe enthaltend leitfähige Substanzen, Flammschutzmittel oder lumineszierende Stoffe. Die leitfähigen Substanzen können ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Als Flammschutzmittel können zum Beispiel Phosphate, Borate, insbesondere Ammoniumpolyphosphat, Tris(tribromneopentyl)-phosphat, Zinkborat oder Borsäurekomplexe von mehrwertigen Alkoholen der Harzschicht zugesetzt werden. Die Verwendung von Flammschutzmitteln führt zu einer Verringerung der Entflammbarkeit und ist daher insbesondere bei Laminatböden von Bedeutung, die in geschlossenen Räumen mit besonderen Anforderungen an den Brandschutz oder in Fluchtwegen eingesetzt werden.

Wie bereits oben erwähnt, können sich aufgrund des Zusatzes an Flammschutzmitteln, Fasern und weitern Additiven die NIR-Spektren durch zusätzliche Peaks verändern. Es kann auch zu einer Verschiebung der Basislinie der NIR-Spektren kommen, was bei der Erstellung des Kalibrationsmodells entsprechend berücksichtigt werden muss. Demnach ist es notwendig, bei Verwendung von Zusätzen zur Harzschicht ein Kalibrationsmodell unter Verwendung einer Referenzprobe zu erstellen, die die gleichen Zusätze in der Harzschicht aufweist.

Zur Verbesserung der Schwerentflammbarkeit können natürlich auch den Trägerplatten, insbesondere den Holzwerkstoffplatten entsprechende Flammschutzmitteln zugefügt werden.

Als lumineszierende Stoffe werden bevorzugt fluoreszierende und/oder phosphoreszierende Stoffe auf anorganischer oder organischer Basis, insbesondere Zinksulfid und Erdalkalialuminate, verwendet. Die lumineszierenden Stoffe können in geometrischen Formen durch Schablonen auf die Oberfläche aufgetragen werden. Durch das Einarbeiten dieser Farbstoffe in die Oberfläche von Werkstoffplatten, die als Fußboden- oder Wandpaneele zum Beispiel in geschlossenen Räumen eingesetzt werden können, ist somit bei Ausfall der Beleuchtung ein Hinweis über Fluchtwege und Fluchtrichtung möglich.

In einer Ausführungsform umfasst die zu vermessende Harzschicht mehr als eine Lage, zum Beispiel mindestens zwei Lagen aus einem Harz. So kann die zu vermessende Harzschicht aus drei Harzlagen bestehen, bzw. drei Harzlagen umfassen, wobei in einer der drei Harzlagen abriebfeste Partikel, zum Beispiel Korundpartikel, enthalten sind, in einer zweiten Harzlage der drei Harzlagen natürliche und/oder synthetische Fasern, wie zum Beispiel Zellulosefasern, enthalten sind und in einer dritten Harzlage der insgesamt drei Harzlagen wiederum abriebfeste Partikel, wie zum Beispiel Glaspartikel, vorhanden sein können. In einer besonders bevorzugten Ausführungsform wird die Lage der Harzschicht enthaltend Korundpartikel auf die Werkstoffplatte als erste Lage aufgetragen, anschließend folgt der Auftrag der die Zellulosefasern enthaltenden zweiten Harzlage und abschließend wird die dritte Harzlage enthaltend Glaspartikel als oberste Lage der Harzschicht aufgebracht. Die erste Harzlage kann 15 bis 25 Gew.%, bevorzugt 20 Gew.% Korundpartikel, die zweite Harzlage 3 bis 7 Gew.%, bevorzugt 5 Gew.% Zellulosefasern und die dritte Harzlage 15 bis 25 Gew.%, bevorzugt 20 Gew.% Glaspartikel enthalten.

Ein Verfahren zur Herstellung der beschriebenen Flüssigoverlayschicht ist unter anderem in der EP 233 86 93 A1 beschrieben. Hierbei erfolgt zunächst nach Reinigung der Ober- und/oder Unterseite einer Holzwerkstoffplatte das Aufbringen einer ersten oberen Korundpartikel enthaltende Harzschicht auf die Oberseite und/oder Unterseite der Holzwerkstoffplatte, ein Trocknen dieser ersten Harzschicht z.B. bis auf eine Restfeuchte von max. 10 Gew.%, bevorzugt von 4 bis 8 Gew.%, anschließendes Aufbringen einer zweiten Zellulosefasern enthaltenen Harzschicht auf die Oberseite und/oder Unterseite der Holzwerkstoffplatte, wiederholtes Trocknen bzw. Antrocknen der zweiten Harzschicht z.B. bis auf eine Restfeuchte von max. 10 Gew.%, bevorzugt von 4 bis 8 Gew.%, Aufbringen einer mindestens dritten Glaspartikel enthaltenden Harzschicht auf die Oberseite und/oder Unterseite mit anschließendem Antrocknen der dritten Harzschicht, z.B. ebenfalls auf eine Restfeuchte von max. 10 Gew.%, bevorzugt von 4 bis 8 Gew. % und ein finales Verpressen des Schichtaufbaus unter Druck- und Temperatureinfluss. Durch die Verwendung eines Flüssigoverlays kann auf das sonst typischerweise vorgesehene Overlaypapier verzichtet werden.

Ein Problem bei der Feuchtedetektion durch NIR ist, dass der Detektor farbempfindlich ist. Dies bedeutet, dass bei gleicher Feuchte im Harzüberstand, aber in ihrer Helligkeit stark unterschiedlichen Drucken auf der Platte, unterschiedliche Feuchtewerte angezeigt werden. Deshalb werden im Falle der Verwendung von Dekorpapiern als reflektierendes faserhaltiges Trägermaterial zum Zwecke der Kalibrierung jeweils Cluster von Dekoren gebildet, die eine ähnliche Farbstellung bzw. Farbeinteilung aufweisen. Auch hier erweist sich die Anwendung der multivariaten Datenanalyse (MDA) als hilfreich. So können die Kalibrierspektren von unterschiedlichen Clustern mit Hilfe der PLS-Regression zu einem Kalibriermodell zusammengefügt werden, mit dem alle Proben ohne zusätzliche Kalibrierung vermessbar sind. Damit wird das Problem einer Farbempfindlichkeit des NIR-Detektors gelöst.

Im Falle der Verwendung von Dekorpapieren als faserhaltiges Trägermaterial kann - muss aber nicht - auf dem Dekorpapier noch mindestens eine zusätzliche Schutzschicht z.B. aus einem Harz oder strahlenhärtbaren Lack vorgesehen sein. Diese Schutzschicht dient insbesondere dem Schutz des Dekors im Falle einer Zwischenlagerung der bedruckten Trägerplatten vor der weiteren Verarbeitung durch Auftragen der Flüssigoverlayschicht. Das Schutzharz kann ein wasserverträgliches Harz, bevorzugt ein formaldehydhaltiges Harz sein. Die auf der Dekorschicht angeordnete Harzschutzschicht wird typischerweise in einem kontinuierlichen Trockenofen angetrocknet. Besteht die auf der Dekorschicht aufgetragene Schutzschicht hingegen aus einem strahlenhärtbaren Lack, wie zum Beispiel aus der Gruppe der Acrylate, modifizierten Acrylate und/oder Epoxide, erfolgt die Vernetzung und Trocknung derselbigen unter Verwendung von UV- oder Elektronenstrahlung. Die auf der Dekorschicht vorgesehene Schutzschicht liegt vor der weiteren Verarbeitung bevorzugt in angetrockneter und/oder angelierter Form vor.

Im Falle der Verwendung von Holzwerkstoffplatten als Trägerplatten, wie z.B. eine mitteldichte Faser (MDF)-, hochdichte Faser (HDF)- oder Grobspan (OSB)- oder Sperrholzplatte, eine Zementfaserplatte und/oder Gipsfaserplatte, enthalten diese als Bindemittel formaldehydhaltige Harze, wie Melamin-Formaldehyd-Harz, Harnstoff-Formaldehyd-Harz, oder Gemische aus beiden oder Phenol-Formaldehyd-Harz.

Das vorliegende Verfahren zur Bestimmung des Feuchtegehaltes kann zusammenfassend für eine Trägerplatte, insbesondere für eine Holzwerkstoffplatte mit folgendem Aufbau angewendet werden:
- Trägerplatte z.B. als Holzwerkstoffplatte aus Holzfasern,
- mindestens eine Schicht aus einem Bindemittel z.B. einem melaminhaltigen Tränkharz,
- mindestens eine unbeharzte oder ggf. teilimprägnierte Schicht aus einem faserhaltigen Trägermaterial z.B. ein Dekorpapier oder ein Overlay-Papier, und
- zu vermessende Harzschicht (Overlay-Schicht), die aus mehreren Harzlagen, zum Beispiel bis zu drei Harzlagen und mehr, bestehen kann.

Entsprechend sind Ausführungsformen mit folgenden Schichtaufbauten (von oben nach unten) möglich:
a) Holzwerkstoffplatte, flüssige Bindemittelschicht (insbesondere flüssige Harzschicht), faserhaltiges Trägermaterial (insbesondere Dekorpapier), Harzschicht;
b) Holzwerkstoffplatte, flüssige Bindemittelschicht (insbesondere flüssige Harzschicht), ein erstes faserhaltiges Trägermaterial (insbesondere Dekorpapier), ein zweites faserhaltiges Trägermaterial (insbesondere ein Overlaypapier), Harzschicht; und/oder
c) Holzwerkstoffplatte, flüssige Bindemittelschicht (insbesondere flüssige Harzschicht), teilimprägniertes faserhaltiges Trägermaterial (insbesondere teilimprägniertes Dekorpapier), Harzschicht.

Wichtig ist auch anzumerken, dass die zu vermessende Harzschicht sowohl auf der Oberseite als auch auf der Unterseite der Trägerplatte, insbesondere der Holzwerkstoffplatte angeordnet sein kann.

In einer Variante des vorliegenden Verfahrens wird der Feuchtegehalt der Harzschicht nach dem Auftragen der Harzschicht zum Beispiel mittels Walzen und einem anschließenden Trocknungsschritt in einem Trocknersegment, zum Beispiel in einem Konvektionstrockner, IR- und/oder NIR-Trockner, unter Verwendung des mindestens einen NIR-Detektors durchgeführt. Entsprechend ist mindestens ein NIR-Detektor in einer Fertigungslinie von Werkstoffplatten in Verarbeitungsrichtung hinter einer Auftragsvorrichtung und einer Trocknungsvorrichtung angeordnet.

Für den Fall, dass die zu vermessende Harzschicht aus mehreren Lagen (Harzlagen) besteht, die in jeweils separaten Verfahrensschritten aufgetragen werden - wie oben beschrieben - erfolgt die Bestimmung des Feuchtegehaltes jeder einzelnen Harzlage jeweils nach Auftragen und Trocknen dieser Harzlage. So kann in einer Variante der Harzschicht mit drei Harzlagen der Feuchtegehalt jeweils nach Auftragen der ersten Lage, der zweiten Lage und der dritten Lage durchgeführt werden. Dadurch ist es möglich, den Feuchtegehalt der Harzlagen bzw. der finalen Harzschicht bereits während des Herstellungsprozesses in der Fertigungslinie der Werkstoffplatten anzupassen und einzustellen.

Das vorliegende Verfahren zur Bestimmung des Feuchtegehaltes von einer auf einer Holzwerkstoffplatte vorgesehenen Harzschicht weist mehrere Vorteile auf. So ermöglicht das Verfahren eine zerstörungsfreie kontinuierliche Messung der Feuchte in der Oberfläche (Online-Messung). Des Weiteren wird der Farbeinfluss auf die Messwerte eliminiert und es können Feuchten in Harzschichten in einem Mengenbereich zwischen 10 und 150 g Festharz/m² vermessen werden. Auch ermöglicht das vorliegende Verfahren die Anwendung eines automatisch geregelten Systems mit Alarmmeldung.

Das vorliegende Verfahren zur Bestimmung des Feuchtegehaltes von mindestens einer auf mindestens einer Trägerplatte vorgesehenen Harzschicht wird in einer Vorrichtung bzw. Fertigungslinie zur Herstellung von Werkstoffplatten durchgeführt, die mindestens eine Auftragsvorrichtung, mindestens eine Trocknungsvorrichtung, und mindestens einen NIR-Detektor zur Durchführung des erfindungsgemäßen Verfahrens umfasst, wobei der mindestens eine NIR-Detektor in Verarbeitungsrichtung nach der Auftragsvorrichtung und der Trocknungsvorrichtung angeordnet ist.

Der mindestens eine NIR-Detektor ist demnach in einer Fertigungslinie der mindestens einen Werkstoffplatte umfassend mindestens eine Auftragsvorrichtung für die Harzschicht, wie zum Beispiel eine Walze, Sprühvorrichtung oder Gießvorrichtung, und mindestens eine Trocknungsvorrichtung, zum Beispiel in Form eines Konvektionstrockners, IR- und/oder NIR-Trockners, angeordnet.

Der NIR-Detektor kann an beliebigen Stellen hinter den Trocknern installiert werden. Dabei kann der Detektor auch über die Plattenbreite traversieren bzw. bestimmte Problembereiche analysieren (z. B. Übertrocknung im Rand- oder Mittelbereich der Platten usw.). Außerdem stehen die Messwerte sofort zur Verfügung und erlauben einen sofortigen Eingriff in den Prozess. Dies ist bei anderen Verfahren nicht ohne weiteres möglich.

In einer Ausführungsform umfasst die Vorrichtung bzw. Fertigungslinie zur Herstellung der Werkstoffplatten mehr als eine Auftragsvorrichtung und mehr als eine Trocknungsvorrichtung, wobei mindestens ein NIR-Detektor in Verarbeitungsrichtung jeweils nach einer Auftragsvorrichtung und einer Trocknungsvorrichtung angeordnet ist.

In einer bevorzugten Ausführungsform sieht der Aufbau einer Fertigungslinie wie folgt aus:
a) eine erste Auftragsvorrichtung zum Auftragen einer ersten Harzschicht auf die Oberseite, insbesondere die Oberseite des auf der Holzwerkstoffplatte angeordneten faserhaltigen Trägermaterials, und/oder Unterseite der Holzwerkstoffplatte, wobei die erste Harzschicht zum Beispiel abriebfeste Partikel in Form von Korundpartikeln enthalten kann,
b) eine in einer Verarbeitungsrichtung hinter der ersten Auftragsvorrichtung angeordnete erste Trocknungsvorrichtung zum Trocknen der ersten oberen und/oder unteren Harzschicht auf eine Restfeuchte von 6 bis 9 Gew.%,
c) einen in Verarbeitungsrichtung hinter der ersten Trocknungsvorrichtung angeordneten ersten NIR-Detektor,
d) eine in Verarbeitungsrichtung hinter dem ersten NIR-Detektor angeordnete zweite Auftragsvorrichtung zum Auftragen einer zweiten Harzschicht, die zum Beispiel Zellulosefasern enthalten kann, auf die Oberseite und/oder Unterseite der Holzwerkstoffplatte,
e) eine in Verarbeitungsrichtung hinter der zweiten Auftragsvorrichtung angeordnete zweite Trocknungsvorrichtung zum Trocknen der zweiten oberen und/oder unteren Harzschicht auf eine Restfeuchte von 6 bis 9 Gew.%,
f) ein in Verarbeitungsrichtung hinter der zweiten Trocknungsvorrichtung angeordneter NIR-Detektor zum Bestimmen des Feuchtegehaltes der aufgetragenen Harzschichten,
g) eine in Verarbeitungsrichtung hinter dem zweiten NIR-Detektor angeordnete dritte Auftragsvorrichtung zum Auftragen einer dritten Harzschicht, die zum Beispiel Glaspartikel als abriebfeste Partikel enthalten kann, auf die Oberseite und/oder Unterseite der Holzwerkstoffplatte,
h) eine in Verarbeitungsrichtung hinter der dritten Auftragsvorrichtung angeordnete dritte Trocknungsvorrichtung zum Trocknen der dritten oberen und unteren Harzschicht auf eine Restfeuchte von 4 bis 8 Gew.%,
i) mindestens ein in Verarbeitungsrichtung hinter der dritten Trocknungsvorrichtung angeordneter NIR-Detektor zum Bestimmen des Feuchtegehaltes der aufgetragenen Harzschicht, und
j) eine Kurztaktpresse.

Die zum Einsatz kommenden Auftragsvorrichtungen sind bevorzugterweise Doppelauftragsvorrichtungen, die ein Auftragen der Harzschichten auf die Oberseite, insbesondere des faserhaltigen Trägermaterials, und/oder die Unterseite der Holzwerkstoffplatte ermöglichen.

Der Feststoffgehalt der aufzutragenden flüssigen Harzschicht (Flüssigoverlay) liegt zwischen 30 und 80 Gew%, bevorzugt zwischen 50 und 65 Gew%.

Je nach Anforderungen der Fertigungslinie ist es selbstverständlich möglich, die Anzahl der Auftragsvorrichtungen, Trocknungsvorrichtungen mit jeweiligem NIR-Detektor zu variieren. So ist es zum Beispiel vorstellbar und möglich, eine Fertigungslinie aus zwei Einheiten umfassend Auftragsvorrichtung, Trocknungsvorrichtung und NIR-Detektor zu verwenden oder auch mehr als drei, wie zum Beispiel vier oder fünf Einheiten aus Auftragsvorrichtung, Trocknungsvorrichtung und NIR-Detektor einzusetzen.

Es ist aber auch vorstellbar und möglich, insbesondere zum Zwecke der Vereinfachung und zur Kostenreduzierung, eine Fertigungslinie derart zu gestalten, dass ein NIR-Detektor nach der letzten Auftragsvorrichtung und Trocknungsvorrichtung vorgesehen ist. In solch einem Fall wird der Feuchtegehalt der aufgebrachten Harzschichten lediglich hinter der letzten Trocknungsvorrichtung bestimmt.

Im Anschluss an den letzten NIR-Detektor ist bevorzugt in Verarbeitungsrichtung eine Kurztaktpresse angeordnet, in der die Harzschicht bzw. Harzschichten unter Druck und Temperatur ausgehärtet werden. Bei diesem abschließenden Verpressen unter Druck- und Temperatureinfluss schmelzen die Harzschichten wieder auf und der Vernetzungsprozess setzt sich fort. Dadurch ist gewährleistet, dass die einzelnen Harzschichten nicht nur in sich, sondern auch untereinander vernetzt werden und so zu einem Laminat verpresst werden können. Üblicherweise arbeiten Kurztaktpressen beispielsweise bei einem Druck von 30 bis 60 kg/cm² und einer Temperatur von 150 bis 220°C, bevorzugt 200°C. Die Presszeit beträgt typischerweise 5 bis 15 sek, bevorzugt 6 bis 12 sek. In der Kurztaktpresse werden üblicherweise strukturierte Pressbleche verwendet, mittels derer zusätzliche Strukturen in die Harzschichten eingeprägt werden können.

Die Erfindung wird nachfolgend unter Bezugnahme auf die Figuren der Zeichnungen an einem Ausführungsbeispiel näher erläutert. Es zeigen:
- Figur 1a: ein Diagramm mit einem NIR-Spektrum gemessen für eine erste Harzschicht mit unbekannten Feuchtegehalt;
- Figur 1b: ein Diagramm mit NIR-Spektren von Referenzproben mit jeweils unterschiedlichen Feuchtegehalt zur Erstellung eines Kalibrationsmodells;
- Figur 2a: ein Diagramm eines ersten PLS-Kalibrationsmodells ermittelt für eine Darrprobe einer mit einer Harzschicht versehenen Trägerplatte; und
- Figur 2b: ein Diagramm eines zweiten PLS-Kalibrationsmodells ermittelt für Referenzproben.

### Ausführungsbeispiel

Die bereits mit einem Dekorpapier versehenen Holzfaserplatten werden in der Produktionslinie vereinzelt und mit einer flüssigen Harzschicht (Flüssigoverlay) beschichtet. Es kann sich bei dem Flüssigoverlay um ein Melamin-Formaldehyd-Harz, ein Harnstoff-Formaldehyd-Harz oder Gemischen aus den beiden Harzen handeln. Der Auftrag der Flüssigoverlayschicht erfolgt bevorzugt mittels Walzen, Sprühen oder Gießen oder einer Kombination der genannten Auftragsverfahren. Bevorzugt ist allerdings das Auftragen des Harzgemisches unter Verwendung einer Walzenvorrichtung. Der Flüssigoverlayschicht können verschleißhemmende Partikel, Hilfsstoffe, wie Netzmittel, Trennmittelhärter und andere Komponenten, wie Glaskugeln oder Zellulose beigefügt werden.

Der Feststoffgehalt der aufzutragenden flüssigen Harzschicht (Flüssigoverlay) liegt zwischen 50 und 65 Gew%. Das Flüssigoverlay wird bevorzugt sowohl auf die Oberseite als auch auf die Rückseite der Holzwerkstoffplatte aufgebracht, wobei der Auftrag auf die Rückseite der Holzwerkstoffplatte ebenfalls unter Verwendung einer Walzvorrichtung erfolgt.

Nach dem Auftrag des Flüssigoverlays durchläuft die Holzwerkstoffplatte ein Trocknungssegment, das zum Beispiel aus einem Konvektions-, einem IR- oder einem NIR-Trockner oder einer Kombination daraus bestehen kann. In diesem Trocknungssegment erfolgt eine Reduzierung der Feuchte in der Harzmatrix auf einen Wert von maximal 10%, bevorzugt auf einen Wert zwischen 6 bis 9 Gew.%. Die Restfeuchte der Harzmatrix, das heißt der Feuchtegehalt der aufgetragenen Harzschicht (flüssiges Overlay) wird nach der Trocknung unter Verwendung von mindestens einem NIR-Detektor bestimmt.

Anschließend durchläuft die Holzwerkstoffplatte zum Zwecke der Auftragung von weiteren Harzlagen weitere Walzenauftragsvorrichtungen und Trocknungsvorrichtungen. In den weiteren Auftragsvorrichtungen wird wiederum eine flüssige Harzschicht aufgebracht, die ebenfalls die genannten abriebfesten Partikel und Fasern und weitere Hilfsstoffe oder auch Farbstoffe enthalten kann. Auch in der weiteren Auftragsvorrichtung kann ein Auftrag der Harzschicht auf die Rückseite der Holzwerkstoffplatte erfolgen. Nach Auftrag und Zwischentrocknung der weiteren Harzschicht kann sich eine erneute Feuchtemessung anschließen. Der Auftrag der Harzschicht mit anschließender Trocknung kann sich noch mehrfach wiederholen, was ebenfalls für die Messung der Feuchte gilt. Nach dem letzten Harzauftrag kann eine abschließende Bestimmung des Feuchtegehaltes der Harzschicht unter Verwendung eines NIR-Detektors erfolgen. Dabei sollte der Feuchtegehalt unter 8% liegen, bevorzugt bei Werten zwischen 4 bis 8 Gew%. Es ist ebenfalls denkbar, zur Vereinfachung und damit zur Kostenreduzierung des gesamten Verfahrens, den Feuchtegehalt der aufgetragenen Harzschicht lediglich hinter der letzten Trocknungsvorrichtung zu bestimmen. Nachdem alle Harzschichten auf die Grundierungsschicht der Holzwerkstoffplatte aufgebracht worden sind, wird die so beschichtete Holzwerkstoffplatte einer Kurztaktpresse zugeführt und die Harzschicht in dieser Kurztaktpresse unter Druck und Temperatur ausgehärtet.

Durch Verwendung von geeigneten verchromten und strukturierten Stahlblechen in der Kurztaktpresse ist es möglich, in der Harzoberfläche der Holzwerkstoffplatte definierte Strukturen einzuprägen. Nach dem Pressen werden die üblichen Qualitätsparameter wie Aushärtung und Porosität bestimmt. Bei Abweichungen von der gewünschten Qualität kann durch Anpassung der Prozessparameter eine Verbesserung der Harzschicht (Flüssigoverlay) herbeigeführt werden.

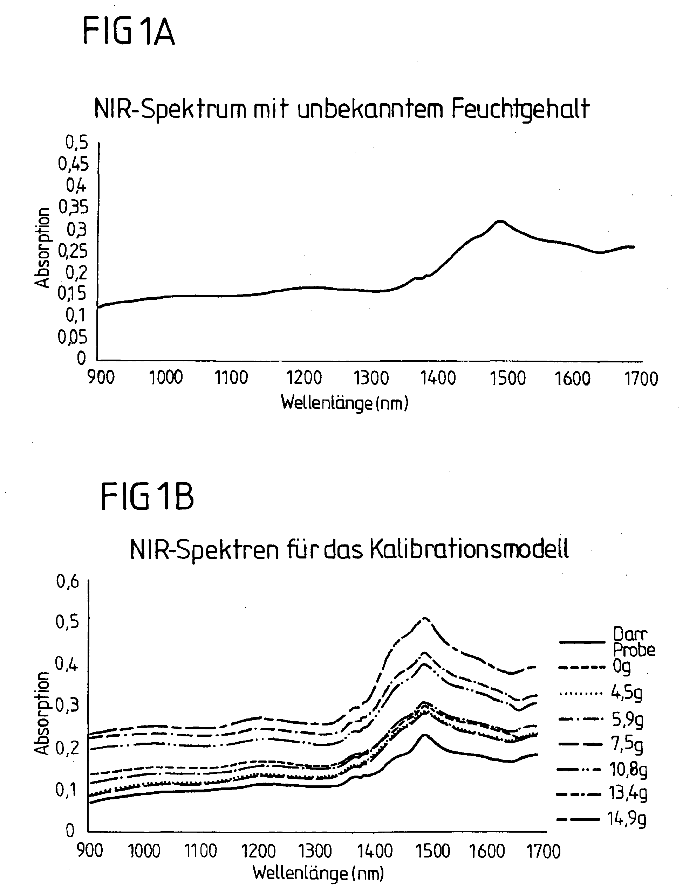

Aus dem Diagramm der Figur 1 a ist ein typisches NIR-Spektrum einer gemäß dem Ausführungsbeispiel aufgetragenen Melamin-Formaldehyd-Harzschicht entnehmbar. Das NIR-Spektrum wurde vorliegend in einem Wellenlängenbereich zwischen 900 und 1700 nm aufgenommen. Für die Aufnahmen der NIR-Spektren wurde ein NIR-Messgerät der Fa. Perten verwendet. Der Messkopf trägt die Bezeichnung DA 7400.

Das Diagramm der Figur 1b zeigt NIR-Spektren von Referenzproben mit unterschiedlichem Feuchtegehalt. Erkennbar ist, dass sich die NIR-Spektren insbesondere in der Höhe der Basislinie unterscheiden. Je höher der Feuchtegehalt desto höher die Basislinie und somit auch der Absorptionswert für das Absorptionsmaximum bei 1490 nm. Die Interpretation der NIR-Spektren erfolgt mittels der multivariaten Datenanlyse (MDA) über den gesamten aufgenommen Spektralbereich des NIR-Spektrums.

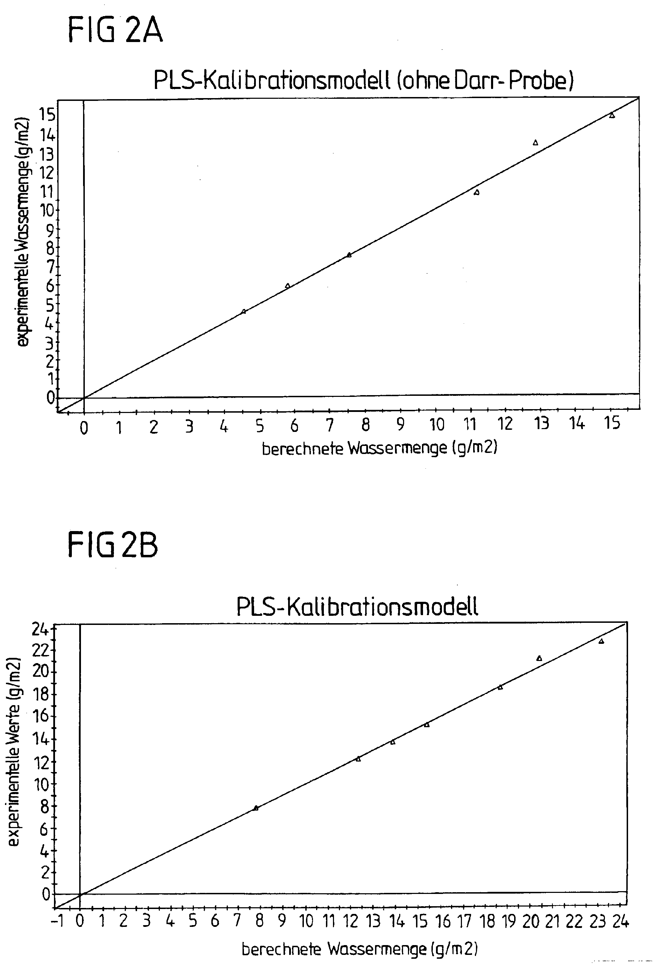

Zur weiteren Auswertung der NIR-Spektren werden geeignete Kalibrationsmodelle erstellt. So zeigt das Diagramm der Figur 2a ein erstes Kalibrationsmodell für die NIR-Spektren der Referenzproben aus Figur 1b (ohne Darrprobe), welches unter Verwendung der Partial Least Squares (PLS) Regression ermittelt wurde.

Die gesamten aufgenommenen und in Figur 1b gezeigten NIR-Spektren werden mit Hilfe der MDA analysiert und für die Bestimmung des Feuchtegehaltes der Darrprobe verwendet. Dazu wird die Partial Least Square (PLS) Regression zur Erstellung einer Kalibrierfunktion benutzt, die eine Abhängigkeit zwischen Spektrum und Feuchtegehalt beschreibt. (Figur 2b) Für den Feuchtegalt der Darrprobe wird von dem Analyseprogramm unter Anwendung der erstellten Kalibrierfunktion einen Feuchtegehalt von -7,82 g/m² berechnet.

**Tabelle 2: Feuchtegehalt der Referenzproben gemäß erstem Kalibrationsmodell ohne Berücksichtigung der Darr-Probe**

| Feuchte experimentell (g/m²) | Feuchte berechnet (g/m²) |
|---|---|
| 0 | -0,0166 |
| 4,5 | 4,518 |
| 5,9 | 6,080 |
| 7,5 | 7,594 |
| 10,8 | 10,871 |
| 13,4 | 12,610 |
| 14,9 | 15,363 |
| Unbekannt (Darr-Probe) | -7,821 |

Anschließend wird der Betrag des Feuchtegehaltes von 7,8 g/m² für die Darrprobe zu allen verwendeten Feuchtewerten der Kalibrierproben bzw. Referenzproben addiert und der Feuchtegehalt der Darrprobe gleich Null gesetzt. Aus diesen neuen Kalibrierwerten der Feuchte und den gemessenen Spektren wird mit Hilfe der Partial Least Squares (PLS) Regression ein zweites Kalibrationsmodell erstellt (Figur 2b), welches nunmehr geeignet ist, eine Beziehung zwischen den gemessenen NIR-Spektren einer zu vermessenden Harzschicht auf einer Trägerplatte mit faserhaltigen Trägermaterial und den NIR-Spektren von Referenzproben mit bekannten Feuchtegehalt zu erstellen (siehe Tabelle 3).

**Tabelle 3: Feuchtegehalt der Referenzproben und der unbekannten Probe gemäß zweitem Kalibrationsmodell mit Berücksichtigung der Darr-Probe**

| Feuchte experimentell (g/m²) | Feuchte berechnet (g/m²) |
|---|---|
| 7,8 | 7,783 |
| 12,3 | 12,318 |
| 13,7 | 13,880 |
| 15,3 | 15,395 |
| 18,6 | 18,672 |
| 21,2 | 20,411 |
| 22,7 | 23,163 |
| (Darr-Probe) 0 | -0,022 |
| Unbekannt (Spektrum Fig. 1a) | 11,189 |

Unter Heranziehung des in Figur 2b gezeigten PLS-Kalibrationsmodels der linearen Regression wird anschließend das für das obige Ausführungsbeispiel ermittelte NIR-Spektrum einem bestimmten Feuchtegehalt zugeordnet. So korreliert im vorliegenden Fall das NIR-Spektrum des Ausführungsbeispiels der Figur 1a einem Feuchtegehalt von ca. 11 g/m².

## Patentansprüche

1. Verfahren zur Bestimmung des Feuchtgehaltes von mindestens einer Harzschicht, wobei die mindestens eine Harzschicht auf mindestens einem auf einer Holzwerkstoffplatte angeordneten und verklebten faserhaltigen Trägermaterial aufgetragen ist,
umfassend die Schritte
- Aufnehmen von mindestens einem NIR-Spektrum der auf der mindestens einen Holzwerkstoffplatte vorgesehenen Harzschicht unter Verwendung eines NIR-Detektors in einem Wellenlängenbereich zwischen 500 nm und 2500 nm, bevorzugt zwischen 700 nm und 2000 nm, insbesondere bevorzugt zwischen 900nm und 1700 nm;
- Bestimmen des Feuchtegehaltes der Harzschicht durch Vergleich des für die zu vermessende Harzschicht ermittelten NIR-Spektrums mit mindestens einem für mindestens eine Referenzprobe mit bekannten Feuchtegehalt ermittelten NIR-Spektrums mittels einer multivariaten Datenanalyse (MDA),
- wobei das mindestens eine für die mindestens eine Referenzprobe ermittelte NIR-Spektrum mit bekanntem Feuchtegehalt unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde, und
- wobei die Oberfläche des faserhaltigen Trägermaterials als NIR-reflektierende Schicht wirkt.

2. Verfahren nach Anspruch 1, **dadurch gekennzeichnet, dass** zumindest eine Seite des mindestens einen faserhaltigen Trägermaterials mit mindestens einem Bindemittel versehen ist.

3. Verfahren nach Anspruch 1 oder 2, **dadurch gekennzeichnet, dass** das mindestens eine faserhaltige Trägermaterial aus organischen Fasern, anorganischen Fasern oder einer Mischung davon hergestellt ist.

4. Verfahren nach einem der vorhergehenden Ansprüche, **dadurch gekennzeichnet, dass** das mindestens eine faserhaltige Trägermaterial aus organischen Fasern ausgewählt aus der Gruppe enthaltend Holzfasern, gebleichte und ungebleichte Zellulosefasern, Baumwollfasern, Jutefasem, Hanffasern, Bambusfasem, Flaxfasern, Sisalfasern und Wollfasern hergestellt ist.

5. Verfahren nach einem der Ansprüche 1 bis 3, **dadurch gekennzeichnet, dass** das mindestens eine faserhaltige Trägermaterial aus anorganischen Fasern ausgewählt aus der Gruppe von Kunststofffasern, insbesondere Fasern aus Polyester, Polyethylenterephthalat, Polyamid, Polyimid, Aramid, Polyacrylnitril, Polytetrafluorethylen, Polyethylen, Polypropylen, Polyvinylchlorid, Polyurethan; Glasfasern und Keramikfasern hergestellt ist.

6. Verfahren nach einem der vorhergehenden Ansprüche, **dadurch gekennzeichnet, dass** das mindestens eine faserhaltige Trägermaterial in Form eines bedruckten oder nicht-bedruckten Papieres, Vlies oder als Folie vorliegt.

7. Verfahren nach einem der vorhergehenden Ansprüche, **dadurch gekennzeichnet, dass** die mindestens eine Holzwerkstoffplatte als Trägerplatte eine mitteldichte Faser (MDF)-, hochdichte Faser (HDF)- oder Grobspan (OSB)- oder Sperrholzplatte, eine Zementfaserplatte und/oder Gipsfaserplatte, eine Magnesiumoxid-Platte, eine Holz-Kunststoff-Platte und/oder eine Kunststoffplatte ist.

8. Verfahren nach einem der vorhergehenden Ansprüche, **dadurch gekennzeichnet, dass** die Referenzprobe mit bekannten Feuchtegehalt mindestens eine auf ein einer Holzwerkstoffplatte angeordnetes faserhaltiges Trägermaterial mit darauf aufgetragener Harzschicht umfasst, wobei Holzwerkstoffplatte, faserhaltiges Trägermaterial und Harzschicht der Referenzprobe gleichartig zu der zu vermessenden Probe aus Holzwerkstoffplatte, faserhaltiges Trägermaterial und Harzschicht sind.

9. Verfahren nach einem der vorhergehenden Ansprüche, **dadurch gekennzeichnet, dass** die zu vermessende Harzschicht aus mindestens einem formaldehydhaltigen Harz, insbesondere einem Melamin-Formaldehyd-Harz, einem Harnstoff-Formaldehyd-Harz oder Gemischen aus beiden, einem Polyurethan oder einem Acrylat besteht.

10. Verfahren nach einem der vorhergehenden Ansprüche, **dadurch gekennzeichnet, dass** die zu vermessende Harzschicht mehr als eine Lage, mindestens zwei Lagen umfasst.

11. Verfahren nach Anspruch 10, **dadurch gekennzeichnet, dass** die zu vermessende Harzschicht drei Lagen umfasst, wobei in einer der drei Lagen der Harzschicht abriebfeste Partikel enthalten sind, in einer zweiten der drei Lagen natürliche und/oder synthetische Fasern enthalten sind und in einer dritten der drei Lagen wiederum abriebfeste Partikel enthalten sind.

12. Verfahren nach einem der vorhergehenden Ansprüche, **dadurch gekennzeichnet, dass** die Bestimmung des Feuchtegehaltes der Harzschicht nach dem Auftragen der Harzschicht auf die Trägerplatte und einem Trocknungsschritt in einem Trocknersegment unter Verwendung des mindestens einen NIR-Detektors erfolgt.

13. Verfahren nach einem der vorhergehenden Ansprüche zur Bestimmung des Feuchtegehaltes einer Harzschicht auf einer Holzwerkstoffplatte mit dem Schichtaufbau: Holzwerkstoffplatte, flüssige Bindemittelschicht, faserhaltiges Trägermaterial, Harzschicht.

14. Verfahren nach einem der Ansprüche 1 bis 12 zur Bestimmung des Feuchtegehaltes einer Harzschicht auf einer Holzwerkstoffplatte mit dem Schichtaufbau: Holzwerkstoffplatte, flüssige Bindemittelschicht, ein erstes faserhaltiges Trägermaterial, ein zweites faserhaltiges Trägermaterial, Harzschicht.

15. Verfahren nach einem der Ansprüche 1 bis 12 zur Bestimmung des Feuchtegehaltes einer Harzschicht auf einer Holzwerkstoffplatte mit dem Schichtaufbau: Holzwerkstoffplatte, flüssige Bindemittelschicht, teilimprägniertes faserhaltiges Trägermaterial, Harzschicht.

## Claims

1. Method for determining the moisture content of at least one resin layer, wherein the at least one resin layer has been applied to at least one fibrous supporting material disposed on and adhered to a wood-base panel,
comprising the steps of
- recording at least one NIR spectrum of the resin layer provided on the at least one wood-base panel by using an NIR detector in a wavelength range between 500 nm and 2500 nm, preferably between 700 nm and 2000 nm, more preferably between 900 nm and 1700 nm;
- determining the moisture content of the resin layer by comparing the NIR spectrum identified for the resin layer to be measured with at least one NIR spectrum identified for at least one reference sample of known moisture content by multivariate data analysis (MDA),
- wherein the at least one NIR spectrum identified for the at least one reference sample of known moisture content was determined beforehand by using the same NIR detector in a wavelength range between 500 nm and 2500 nm, preferably between 700 nm and 2000 nm and more preferably between 900 nm and 1700 nm, and
- wherein the surface of the fibrous supporting material acts as an NIR-reflecting layer.

2. Method according to Claim 1, **characterized in that** at least one side of the at least one fibrous supporting material is provided at least one binder.

3. Method according to Claim 1 or 2, **characterized in that** the at least one fibrous supporting material is made from organic fibres, inorganic fibres or a mixture thereof.

4. Method according to any preceding claim, **characterized in that** the at least one fibrous supporting material is produced from organic fibres selected from the group containing wood fibres, bleached and unbleached cellulosic fibres, cotton fibres, jute fibres, hemp fibres, bamboo fibres, flax fibres, sisal fibres and wool fibres.

5. Method according to any one of Claims 1 to 3, **characterized in that** the at least one fibrous supporting material is produced from inorganic fibres selected from the group of polymeric fibres, especially fibres of polyester, polyethylene terephthalate, polyamide, polyimide, aramid, polyacrylonitrile, polytetrafluoroethylene, polyethylene, polypropylene, polyvinyl chloride, polyurethane; glass fibres and ceramic fibres.

6. Method according to any preceding claim, **characterized in that** the at least one fibrous supporting material is present in the form of a printed or unprinted paper, batting or as foil.

7. Method according to any preceding claim, **characterized in that** the at least one wood-base panel serving as supporting panel is a medium density fibre (MDF), high density fibre (HDF) or oriented strand board (OSB) or plywood panel, a cement fibre panel and/or plaster fibre panel, a magnesium oxide panel, a wood-polymer panel and/or a polymeric panel.

8. Method according to any preceding claim, **characterized in that** the reference sample of known moisture content comprises at least one fibrous supporting material disposed on a wood-base panel and supporting a resin layer applied thereto, wherein wood-base panel, fibrous supporting material and resin layer in respect of the reference sample are similar to the sample to be measured and made up of wood-base panel, fibrous supporting material and resin layer.

9. Method according to any preceding claim, **characterized in that** the resin layer to be measured consists of at least one formaldehyde resin, especially a melamine-formaldehyde resin, a urea-formaldehyde resin or a mixture thereof, a polyurethane or an acrylate.

10. Method according to any preceding claim, **characterized in that** the resin layer to be measured comprises more than one ply, at least two plies.

11. Method according to Claim 10, **characterized in that** the resin layer to be measured comprises three plies, wherein one of the three plies of the resin layer contains abrasion-resistant particles, a second one of the three plies contains natural and/or synthetic fibres and a third one of the three plies again contains abrasion-resistant particles.

12. Method according to any preceding claim, **characterized in that** the determination of the moisture content of the resin layer is effected after application of the resin layer to the supporting panel and after a drying step in a dryer segment by using the at least one NIR detector.

13. Method according to any preceding claim for determining the moisture content of a resin layer on a wood-base panel having the layered construction: wood-base panel, liquid binder layer, fibrous supporting material, resin layer.

14. Method according to any one of Claims 1 to 12 for determining the moisture content of a resin layer on a wood-base panel having the layered construction: wood-base panel, liquid binder layer, a first fibrous supporting material, a second fibrous supporting material, resin layer.

15. Method according to any one of Claims 1 to 12 for determining the moisture content of a resin layer on a wood-base panel having the layered construction: wood-base panel, liquid binder layer, partially impregnated fibrous supporting material, resin layer.

## Revendications

1. Procédé de détermination de la teneur en humidité d'au moins une couche de résine, ladite au moins une couche de résine étant appliquée sur au moins un matériau support fibreux, collé et agencé sur un panneau de matériau à base de bois,
comprenant les étapes suivantes :
- l'enregistrement d'au moins un spectre NIR de la couche de résine prévue sur ledit au moins un panneau de matériau à base de bois en utilisant un détecteur NIR dans une plage de longueur d'onde comprise entre 500 nm et 2 500 nm, de préférence entre 700 nm et 2 000 nm, de manière particulièrement préférée entre 900 nm et 1 700 nm ;
- la détermination de la teneur en humidité de la couche de résine par comparaison du spectre NIR déterminé pour la couche de résine à analyser avec au moins un spectre NIR déterminé pour au moins un échantillon de référence ayant une teneur en humidité connue au moyen d'une analyse de données multivariée (MDA),
- ledit au moins un spectre NIR déterminé pour ledit au moins un échantillon de référence de teneur en humidité connue ayant été déterminé auparavant en utilisant le même détecteur NIR dans une plage de longueurs d'onde comprise entre 500 nm et 2 500 nm, de préférence entre 700 nm et 2 000 nm, de manière particulièrement préférée entre 900 nm et 1 700 nm, et
- la surface du matériau support fibreux agissant en tant que couche réfléchissant les rayonnements NIR.

2. Procédé selon la revendication 1, **caractérisé en ce qu'**au moins un côté dudit au moins un matériau support fibreux est muni d'au moins un liant.

3. Procédé selon la revendication 1 ou 2, **caractérisé en ce que** ledit au moins un matériau support fibreux est fabriqué à partir de fibres organiques, de fibres inorganiques ou d'un mélange de celles-ci.

4. Procédé selon l'une quelconque des revendications précédentes, **caractérisé en ce que** ledit au moins un matériau support fibreux est fabriqué à partir de fibres organiques choisies dans le groupe contenant les fibres de bois, les fibres de cellulose blanchies et non blanchies, les fibres de coton, les fibres de jute, les fibres de chanvre, les fibres de bambou, les fibres de lin, les fibres de sisal et les fibres de laine.

5. Procédé selon l'une quelconque des revendications 1 à 3, **caractérisé en ce que** ledit au moins un matériau support fibreux est fabriqué à partir de fibres inorganiques choisies dans le groupe constitué par les fibres en plastique, notamment les fibres en polyester, polyéthylène téréphtalate, polyamide, polyimide, aramide, polyacrylonitrile, polytétrafluoroéthylène, polyéthylène, polypropylène, polychlorure de vinyle, polyuréthane ; les fibres de verre et les fibres céramiques.

6. Procédé selon l'une quelconque des revendications précédentes, **caractérisé en ce que** ledit au moins un matériau support fibreux se présente sous la forme d'un papier imprimé ou non imprimé, d'un non-tissé ou sous la forme d'une feuille.

7. Procédé selon l'une quelconque des revendications précédentes, **caractérisé en ce que** ledit au moins un panneau de matériau à base de bois en tant que panneau support est un panneau de fibres de densité moyenne (MDF), de fibres de densité élevée (HDF) ou de particules orientées (OSB) ou de contreplaqué, un panneau de fibrociment et/ou un panneau de fibres-plâtre, un panneau d'oxyde de magnésium, un panneau en bois et plastique et/ou un panneau en plastique.

8. Procédé selon l'une quelconque des revendications précédentes, **caractérisé en ce que** l'échantillon de référence de teneur en humidité connue comprend au moins un matériau support fibreux agencé sur un panneau en un matériau à base de bois, sur lequel est appliquée une couche de résine, le panneau de matériau à base de bois, le matériau support fibreux et la couche de résine de l'échantillon de référence étant de même type que l'échantillon à analyser constitué d'un panneau en matériau à base de bois, d'un matériau support fibreux et d'une couche de résine.

9. Procédé selon l'une quelconque des revendications précédentes, **caractérisé en ce que** la couche de résine à analyser est constituée par au moins une résine contenant du formaldéhyde, notamment une résine mélamine-formaldéhyde, une résine urée-formaldéhyde ou des mélanges des deux, un polyuréthane ou un acrylate.

10. Procédé selon l'une quelconque des revendications précédentes, **caractérisé en ce que** la couche de résine à analyser comprend plus d'une couche, au moins deux couches.

11. Procédé selon la revendication 10, **caractérisé en ce que** la couche de résine à analyser comprend trois couches, des particules résistantes à l'abrasion étant contenues dans une des trois couches de la couche de résine, des fibres naturelles et/ou synthétiques étant contenues dans une deuxième des trois couches, et des particules résistantes à l'abrasion étant de nouveau contenues dans une troisième des trois couches.

12. Procédé selon l'une quelconque des revendications précédentes, **caractérisé en ce que** la détermination de la teneur en humidité de la couche de résine a lieu en utilisant ledit au moins un détecteur NIR après l'application de la couche de résine sur le panneau support et une étape de séchage dans un segment séchoir.

13. Procédé selon l'une quelconque des revendications précédentes, pour la détermination de la teneur en humidité d'une couche de résine sur un panneau en un matériau à base de bois ayant la structure de couches suivante : panneau de matériau à base de bois, couche de liant liquide, matériau support fibreux, couche de résine.

14. Procédé selon l'une quelconque des revendications 1 à 12, pour la détermination de la teneur en humidité d'une couche de résine sur un panneau en un matériau à base de bois ayant la structure de couches suivants : panneau de matériau à base de bois, couche de liant liquide, un premier matériau support fibreux, un second matériau support fibreux, couche de résine.

15. Procédé selon l'une quelconque des revendications 1 à 12, pour la détermination de la teneur en humidité d'une couche de résine sur un panneau en un matériau à base de bois ayant la structure de couches suivants : panneau de matériau à base de bois, couche de liant liquide, matériau support fibreux partiellement imprégné, couche de résine.
